# EUROPEAN PATENT APPLICATION

(11) **EP 4 546 613 A1**
(43) Date of publication of application: **30.04.2025**
(21) Application number: 24205811.3
(22) Date of filing: 10.10.2024
(51) Int. Cl.: H02K 1/276, H02K 15/035

(54) **A MAGNET UNIT AND A METHOD FOR MANUFACTURING THE SAME**

(30) Priority: 24.10.2023 JP 2023182321; 30.05.2024 JP 2024087741
(71) Applicant: Nichia Corporation, Anan-shi, Tokushima 774-8601 (JP)
(72) Inventor: KIBA, Daizo, Anan-shi, Tokushima, 774-8601 (JP)
(74) Representative: Winter, Brandl - Partnerschaft mbB

(57) **Abstract**

A method for manufacturing a magnet unit (100) includes: a process of placing a holding member (10) in a mold (20), the holding member (10) including a first surface, a second surface, and multiple holes (13) extending from the first surface to the second surface, the mold (20) including one or more gas venting grooves (21), the process of placing in the mold (20) causing the second surface to face the one or more gas venting grooves (21) and causing two or more of the multiple holes (13) to be connected to each other via the one or more gas venting grooves (21); a process of injection-molding a magnetic material (30) into the multiple holes of the holding member (10) that is placed in the mold (20) from a side of the first surface; and a process of removing the holding member (10) from the mold (20).

## Description

### FIELD

Embodiments described herein relate generally to a magnet unit and a method for manufacturing the same.

### BACKGROUND

JP-A 2015-61430 (Kokai) describes an interior permanent magnet motor that includes a rotor and a magnet embedded in a hole of the rotor. The magnet is formed by using injection molding to fill a bonded magnet into the hole of the rotor. During the injection molding, the rotor is placed inside a mold; and the mold includes an air venting structure for venting air from the hole.

### BRIEF DESCRIPTION OF THE DRAWINGS

FIG. 1 is a flowchart showing a method for manufacturing a magnet unit according to an embodiment;
FIG. 2 schematically illustrates a cross-sectional view of a structure around a holding member for describing a process of the method for manufacturing the magnet unit according to the embodiment;
FIG. 3 schematically illustrates a cross-sectional view the structure at a plane with no gas venting groove;
FIG. 4 schematically illustrates a cross-sectional view the structure for describing another process of the method for manufacturing the magnet unit according to the embodiment;
FIG. 5 schematically illustrates a cross-sectional view of the magnet unit according to the embodiment;
FIG. 6 schematically illustrates a transparent plan view of the structure according to an example of a layout of multiple holes and gas venting grooves;
FIG. 7 schematically illustrates a transparent plan view of the structure according to a modification of the layout of the multiple holes and the gas venting grooves;
FIG. 8 schematically illustrates a cross-sectional view of the structure according to the modification for describing the gas venting grooves thereof;
FIG. 9 schematically illustrates a transparent plan view of the structure according to another modification of the layout of the multiple holes and the gas venting grooves;
FIG. 10 schematically illustrates a transparent plan view of the structure according to still another modification of the layout of the multiple holes and the gas venting grooves; and
FIG. 11 schematically illustrates a plan view of the magnet unit according to the embodiment.

### DETAILED DESCRIPTION

Embodiments of the disclosure will now be elaborated. However, the embodiments described below are examples embodying the technical concept of the invention, and do not limit the invention to the following. In the specification, the term "process" includes not only an independent process, but also a process that cannot be clearly discriminated from other processes, as long as the expected purpose of the process is achieved.

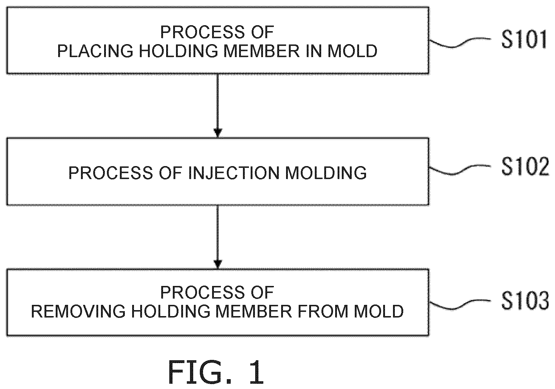

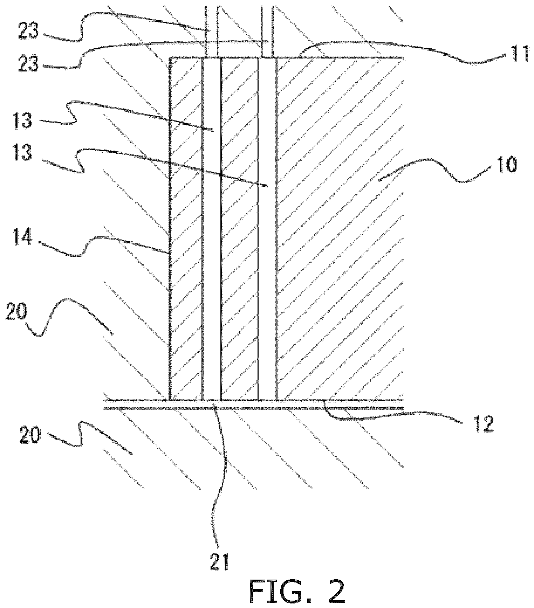

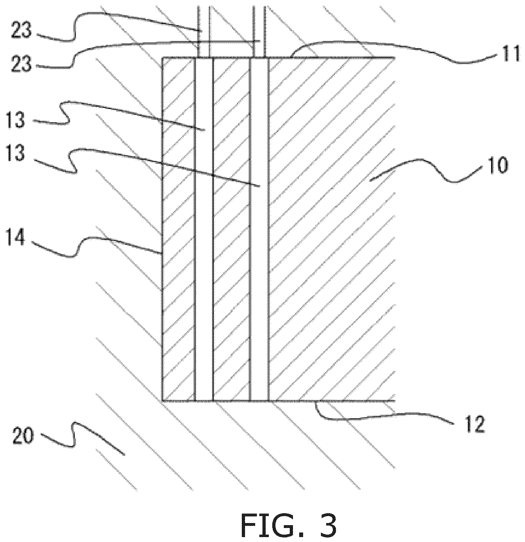

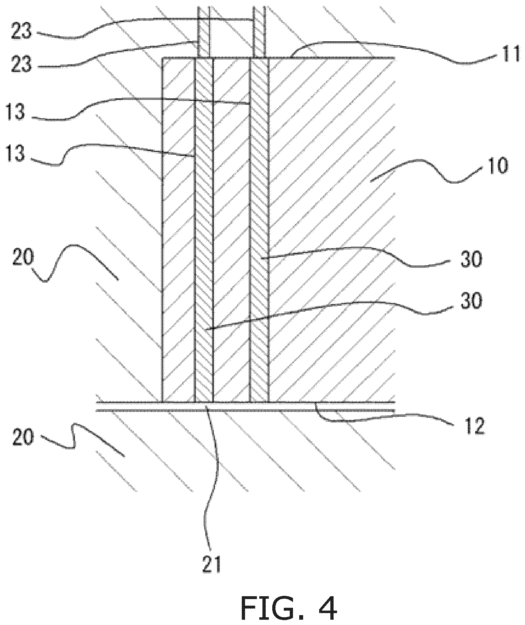

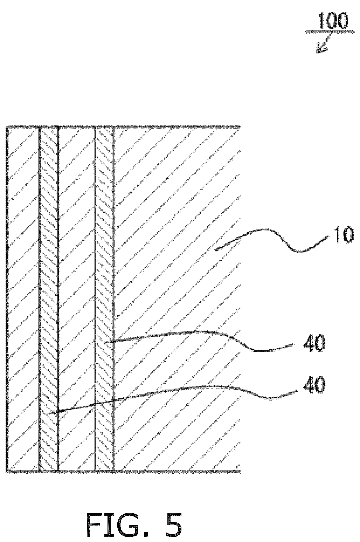

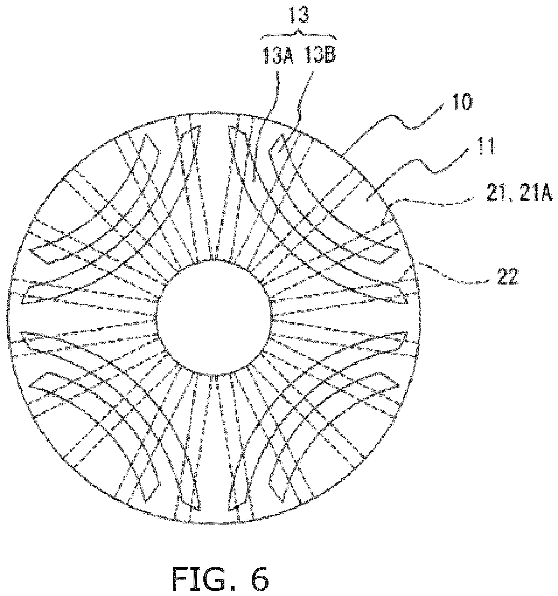

A method for manufacturing a magnet unit according to an embodiment will now be described using FIGS. 1 to 6. FIG. 1 is a flowchart showing the method for manufacturing the magnet unit according to the embodiment. FIG. 2 schematically illustrates a cross-sectional view of a structure around a holding member for describing a process of the method for manufacturing the magnet unit according to the embodiment. FIG. 3 schematically illustrates a cross-sectional view of the structure at a plane with no gas venting groove. FIG. 4 schematically illustrates a cross-sectional view of the structure for describing another process of the method for manufacturing the magnet unit according to the embodiment. FIG. 5 schematically illustrates a cross-sectional view of the magnet unit according to the embodiment. FIG. 6 schematically illustrates a transparent plan view of the structure according to an example of a layout of the multiple holes and the gas venting grooves. FIG. 6 illustrates a transparent plan view from a first end surface 11 side. In FIG. 6, a holding member 10 in which multiple holes 13 are provided is illustrated by solid lines; and the portions of gas venting grooves 21 and 22 overlapping the holding member 10 are illustrated by broken lines.

The method for manufacturing a magnet unit 100 according to the embodiment includes a process S101 of placing the holding member 10 in a mold 20, a process S102 of injection molding, and a process S103 of removing the holding member 10 from the mold 20. In the process S101, the holding member 10 that includes the multiple holes 13 extending from the first end surface 11 (may be referred to as a "first surface") to a second end surface 12 (may be referred to as a "second surface") is placed in the mold 20, which includes one or more gas venting grooves 21, so that the second end surface 12 of the holding member 10 faces the one or more gas venting grooves 21 of the mold 20. In the process S101, two or more of the multiple holes 13 are connected (e.g., placed in an air communication state) by the one or more gas venting grooves 21. In the process S102, a magnetic material 30 is injection-molded into the multiple holes 13 from the first end surface 11 side. In the process S103, the holding member 10 is removed from the mold 20.

A mold to be used in the process of injection-molding the magnetic material 30 into the multiple holes 13 provided in the holding member 10 can be designed more easily with a layout in which two or more of the multiple holes 13 are connected by the gas venting groove(s) 21 in comparison to a layout in which one gas venting groove is connected to only one hole. Accordingly, the magnet unit 100 can be easily obtained.

In the layout in which one gas venting groove is connected to only one hole, it is necessary for the gas venting groove to avoid the other holes, and so there is a risk that complex bends of the gas venting groove may obstruct gas exhaust. In the layout in which the gas venting groove 21 connects two or more holes 13, it is unnecessary to avoid the holes 13, and so the gas venting groove 21 can be designed by considering the gas exhaust efficiency. As shown in FIG. 6, the mold 20 may include not only the gas venting groove 21 that connects two or more holes 13, but also a gas venting groove 22 that is connected to only one hole 13. By increasing the gas exhaust efficiency with the gas venting groove(s) 21, filling pressure during the injection molding can be reduced. As a result, the necessary strength of the holding member 10 can be reduced, and the magnetic properties of the magnet unit 100 obtained can be improved due to the increase of the design degree of freedom of the multiple holes 13 provided in the holding member 10. By reducing the necessary strength of the holding member 10, the total volume of the multiple holes 13 provided in the holding member 10 can be increased. By reducing the necessary strength of the holding member 10, the thickness of the wall of the holding member 10, i.e., the distance to the hole 13 from the side surface of the holding member 10 (in the case of a cylindrical holding member 10, the outer surface), can be reduced.

When injection-molding into the multiple holes 13, the time to completely fill each hole 13 may fluctuate depending on the hole 13. Although the gas present in the hole 13 can be exhausted outside by directly or indirectly connecting the gas venting groove 21 to a device such as, for example, a suction device or the like, if only one hole is connected to one gas venting groove, when the suction is continued in a state in which one hole has been filled but another hole has not been fully filled and is still underway of filling, there is a possibility that the magnetic material 30 in the filled hole may overflow into the gas venting groove. According to the configuration in which the gas venting groove 21 connects two or more holes 13, even when only one of the two or more holes 13 connected to the one gas venting groove 21 is filled first and the other hole 13 is still underway of filling, the likelihood of the magnetic material 30 overflowing into the gas venting groove 21 from the filled hole 13 can be reduced.

### Process of placing holding member in mold

In the process S101 of placing the holding member 10 in the mold 20, the holding member 10 and the mold 20 are arranged so that the second end surface 12 of the holding member 10 faces the one or more gas venting grooves 21 of the mold 20. Two or more of the multiple holes 13 are connected by one or more gas venting grooves 21. When viewed from the first end surface 11 side as being see-through, portions of one gas venting groove 21 overlap portions or all of two or more holes 13.

The gas venting groove 21 is designed so that the gas present in the hole 13 can be exhausted to the outside. For example, the gas venting groove 21 is connected to the suction device directly or via other grooves and/or holes. When the magnetic material 30 is injected, the gas venting grooves 21 and the holes 13 can be decompressed by the suction device. As a result, the gas that is present in the holes 13 can be exhausted outside from the holes 13. The gas that is present in the holes 13 is, for example, air; and when gas is released from the magnetic material 30, such released gas also is included. As shown in FIG. 2, one or more other grooves that are continuous with the gas venting groove 21 may be provided in the mold 20 (left of the gas venting groove 21 in FIG. 2). In such a case, the gas venting groove 21 refers to the portions of the grooves that are provided in the mold 20 and face the second end surface 12 of the holding member 10. The same is true for the gas venting groove 22.

The width of the gas venting groove 21 can be large enough to allow the exhaust of the gas present in the holes 13, but small enough that the gas venting groove 21 is not mashed due to the clamping force of the mold 20. The width of the gas venting groove 21 refers to the length in a direction perpendicular to the extension direction of the gas venting groove 21 when viewed in plan. When the length in such a direction is not constant, the width of the gas venting groove 21 is taken to be the minimum length. When the gas venting groove 21 overlaps only a portion of the hole 13 when viewed in plan, the width of the gas venting groove 21 is favorably not less than 0.5 mm, and more favorably not less than 2 mm. The gas exhaust efficiency can be increased thereby. The width of the gas venting groove 21 is favorably not more than 12 mm, and more favorably not more than 5 mm. As a result, the likelihood of the gas venting groove 21 being mashed due to the clamping force can be reduced. It is favorable for the width of the gas venting groove 21 to be not less than 2 mm and not more than 5 mm. The width of the gas venting groove 22 can be selected from a numerical range similar to that of the width of the gas venting groove 21. When multiple gas venting grooves 21 are provided in the mold 20, the width of each of the multiple gas venting grooves 21 may be the same. The widths being the same includes an error within ±1 mm.

Each of the one or more gas venting grooves 21 may be linear when viewed in plan from the first end surface 11 side. As a result, the exhaust efficiency of the gas present in the hole 13 can be increased. As shown in FIG. 6, the one or more gas venting grooves 21 can include multiple grooves spreading radially when viewed in plan. The exhaust efficiency of the gas present in the hole 13 can be increased thereby. The multiple grooves that spread radially are multiple linear grooves extending from the central portion toward the outer edge of the holding member 10 when viewed in plan. In the example shown in FIG. 6, the width of each of the multiple grooves is constant from one end to the other end. In an alternative implementation, the width of one or more of the multiple grooves may not be constant. The multiple grooves each may have a shape in which the width enlarges from the central portion toward the outer edge of the holding member 10. One or more gas venting grooves 22 also can include multiple grooves spreading radially when viewed in plan.

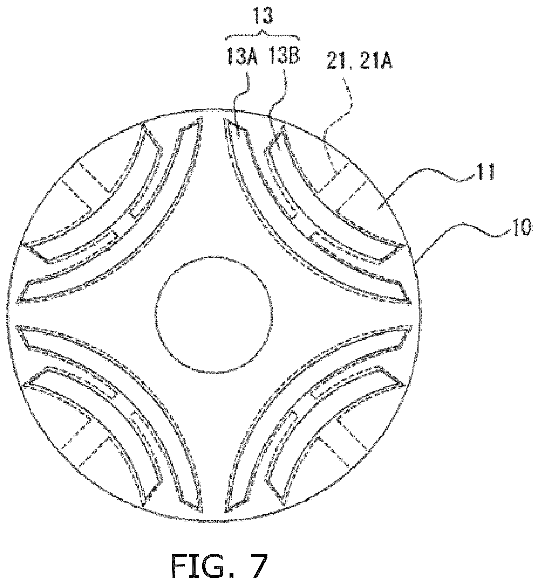

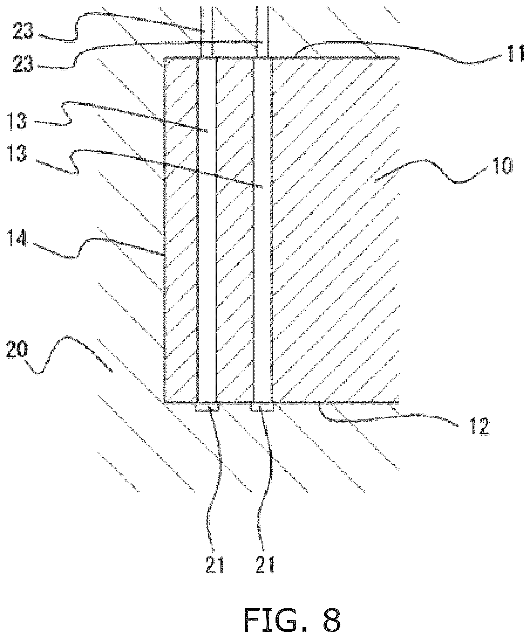

The edges of the one or more gas venting grooves 21 may be positioned to coincide with or to be outside the edges of the multiple holes 13. In other words, the edges of the one or more gas venting grooves 21 may be aligned with the edges of the multiple holes 13. More preferably, a footprint of the one or more gas venting grooves 21 may enclose a footprint of the plurality of holes. As a result, a layout is possible in which the multiple holes 13 are not blocked by the mold 20; and the exhaust efficiency of the gas present in the holes 13 can be increased. In such a case, the shape of the gas venting groove 21 when viewed in plan may not be linear. A modification 1 of the layout of the multiple holes 13 and the gas venting grooves 21 will now be described using FIGS. 7 and 8. FIG. 7 schematically illustrates a transparent plan view of the structure around the holding member 10 according to the modification 1 of the layout of the multiple holes 13 and the gas venting grooves 21. FIG. 7 illustrates a transparent plan view from the first end surface 11 side. In FIG. 7, the holding member 10 in which the multiple holes 13 are provided is illustrated by solid lines; and the portions of the gas venting grooves 21 and 22 overlapping the holding member 10 are illustrated by broken lines. FIG. 8 schematically illustrates a cross-sectional view of the structure according to the modification 1 for describing the gas venting grooves 21 thereof.

According to the modification 1 shown in FIGS. 7 and 8, the edges of the one or more gas venting grooves 21 are positioned outside the edges of the multiple holes 13. Therefore, the gas that is present in the holes 13 can be exhausted into the gas venting grooves 21 without being blocked by the mold 20. According to the modification 1, the one or more gas venting grooves 21 are shaped to enclose the multiple holes 13 when viewed in plan. The gas venting grooves 21 are shaped to connect with the outer edge of the holding member 10 when viewed in plan. Such a shape makes it easier to ensure a path for exhausting the gas outside. According to the modification 1, the mold 20 includes only the gas venting grooves 21, and includes no gas venting groove that is connected to only one hole 13.

In the case where the gas venting grooves 21 are arranged so that the multiple holes 13 are not blocked by the mold 20, although the edges of the holes 13 may coincide with the edges of the gas venting grooves 21 when viewed in plan, it is preferable for the edges of the gas venting grooves 21 to be positioned outside the edges of the holes 13 when viewed in plan. In such a case, it can be said that the edges of the gas venting groove 21 are positioned away from the edges of the holes 13 when viewed in plan. As a result, the likelihood of the magnetic material 30 completely blocking the gas venting groove 21 can be reduced, even when the magnetic material 30 reaches the gas venting groove 21 during the injection molding. It is favorable for the shortest distance from the edge of the hole 13 to the edge of the gas venting groove 21 when viewed in plan to be not less than 0.1 mm, and more favorably not less than 0.2 mm. As a result, the likelihood of the gas venting groove 21 being completely blocked by the magnetic material 30 can be further reduced. It is favorable for the shortest distance from the edge of the hole 13 to the edge of the gas venting groove 21 when viewed in plan to be not more than 5 mm, and more favorably not more than 2 mm. As a result, the likelihood of the gas venting groove 21 being mashed by the clamping force can be reduced. It is favorable for the shortest distance from the edge of the hole 13 to the edge of the gas venting groove 21 when viewed in plan to be not less than 0.2 mm and not more than 2 mm. It is favorable for the edge of the gas venting groove 21 to be positioned outside the edge of the hole 13 at the entire perimeter of the gas venting groove 21 when viewed in plan. As a result, the likelihood of the magnetic material 30 completely blocking the gas venting groove 21 can be further reduced.

The shapes, sizes, number, etc., of the multiple holes 13 can be set according to the target values of the magnetic properties of the magnet unit 100. The multiple holes 13 may have the same or different shapes. The areas of the openings of the multiple holes 13 at the second end surface 12 side may be the same or different. The number of the multiple holes 13 provided in the one holding member 10 may be not less than 2, not less than 8, or not less than 30. As the number of the holes 13 increases, the effect of simplifying the design as well as the effect of suppressing the likelihood of differences in the time to be completely filled are easily obtained by connecting two or more holes 13 with one gas venting groove 21. Although the number of the multiple holes 13 provided in one holding member 10 depends on the size of the holding member 10, the number of the multiple holes 13 may be not more than 100, not more than 80, or not more than 60.

The multiple holes 13 can include multiple first holes 13A and multiple second holes 13B. A first area is an area of an opening of each of the plurality of first holes 13A when viewed from the second end surface 12 side. A second area is an area of an opening of each of the plurality of second holes 13B when viewed from the second end surface 12 side. The second area is less than the first area. Thus, when the holes 13 of different types are provided, the effect of providing the gas venting groove 21 can be obtained even better because the likelihood of fluctuation of the time until the filling is completed is higher. The one or more gas venting grooves 21 may include a first groove 21A. It is favorable for at least one of the multiple first holes 13A and at least one of the multiple second holes 13B to be connected by the first groove 21A. By connecting the first groove 21A to the first and second holes 13A and 13B which have different areas, the likelihood of the filled magnetic material 30 overflowing into the first groove 21A due to the fluctuation of the time to completely fill can be further reduced. The second area of the second hole 13B may be not more than 90%, or not more than 80% of the first area of the first hole 13A. The second area of the second hole 13B may be not less than 20%, or not less than 40% of the first area of the first hole 13A. For example, the second area of the second hole 13B can be not less than 40% and not more than 80% of the first area of the first hole 13A.

When the gas venting groove 22 that is connected to only one hole 13 is provided, it is favorable that the hole 13 connected to the gas venting groove 22 has a relatively long time to completely fill. As a result, the likelihood of the magnetic material 30 overflowing into the gas venting groove 22 can be reduced. For example, in the case of the first and second holes 13A and 13B, it is favorable for the gas venting groove 22 to be connected to the first hole 13A because the first hole 13A that has a larger opening area tends to take more time to completely fill.

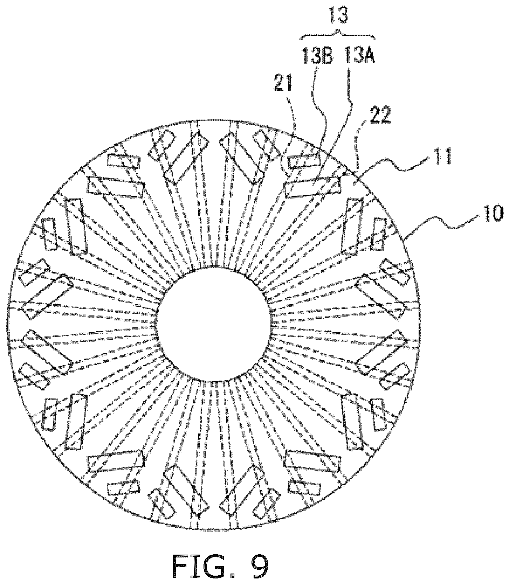

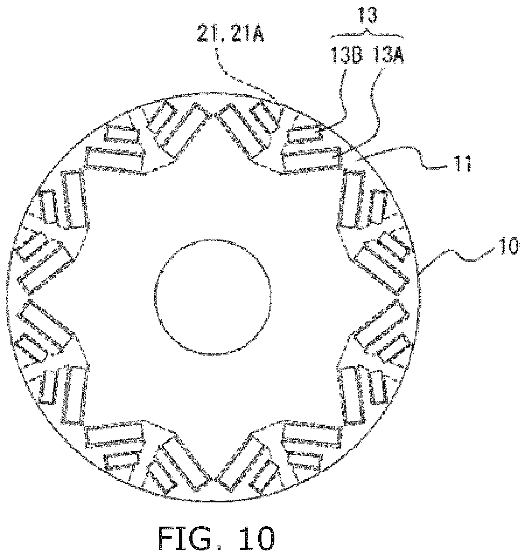

A modification 2 and a modification 3 of the layout of the multiple holes 13 and the gas venting grooves 21 will now be described using FIGS. 9 and 10. FIG. 9 schematically illustrates a transparent plan view of the structure around the holding member 10 according to the modification 2 of the layout of the multiple holes 13 and the gas venting grooves 21. FIG. 10 schematically illustrates a transparent plan view of the structure around the holding member 10 according to the modification 3 of the layout of the multiple holes 13 and the gas venting grooves 21. FIGS. 9 and 10 illustrate plan views when viewed from the first end surface 11 side. In FIGS. 9 and 10, the holding member 10 in which the multiple holes 13 are provided is illustrated by solid lines; and the portion of the gas venting grooves 21 and 22 overlapping the holding member 10 are illustrated by broken lines. The shape and layout of the holes 13 according to the modifications 2 and 3 shown in FIGS. 9 and 10 are different from those of the examples shown in FIGS. 6 and 7. Even when providing such holes 13, advantages similar to those of the examples described above can be achieved by providing the gas venting groove 21.

As shown in FIG. 10, two or more of the multiple first holes 13A may be connected by one gas venting groove 21 (the first groove 21A). Two or more of the multiple second holes 13B may be connected by the first groove 21A. Two or more first holes 13A and two or more second holes 13B may be connected by the first groove 21A. As a result, the likelihood of the filled magnetic material 30 overflowing into the first groove 21A can be further reduced.

The holding member 10 is, for example, a rotor core. The holding member 10 is, for example, cylindrical. When the holding member 10 is a rotor core, the holding member 10 as a whole may be referred as a magnetic body. When the holding member 10 is a rotor core, the holding member 10 includes laminated steel sheets. The laminated steel sheets include multiple steel plates stacked in the direction from the second end surface 12 toward the first end surface 11. The laminated steel sheet is, for example, an electrical steel sheet.

The mold 20 may include multiple parts. Because the mold 20 includes multiple parts, the holding member 10 can be easily fixed by the mold 20; and the holding member 10 can be easily removed from the mold 20. One or more gates 23 may be provided in the mold 20. The gate(s) 23 is connected to the hole 13 at the first end surface 11 side. Although the multiple gas venting grooves 21 are provided independently of each other in the examples of the drawings, the multiple gas venting grooves 21 may be partially connected. When all of the gas venting grooves 21 are connected, it can be said that only one gas venting groove 21 is provided in the mold 20.

### Process of injection molding

In the process S102 of injection molding, the magnetic material 30 is injection-molded into the multiple holes 13 from the first end surface 11 side. As shown in FIG. 4, the magnetic material 30 reaches the holes 13 via the gates 23 of the mold 20. The magnetic material 30 is injected from above in FIG. 4. For example, the injection molding can be performed until the holes 13 are completely filled with the magnetic material 30. The degree of the filling at which the injection molding is to be ended can be appropriately set according to the target magnetic properties of the magnet unit 100.

The magnetic material 30 includes a resin and magnetic powders. The resin may be a thermoplastic resin or a thermosetting resin. The resin may include both a thermosetting resin and a thermoplastic resin. The resin is, for example, a thermoplastic resin.

Examples of the thermoplastic resin include a nylon resin (a polyamide resin); polyolefins such as polypropylene (PP) and polyethylene (PE); polyester; polycarbonate (PC); polyphenylene sulfide resin (PPS); polyetheretherketone (PEEK); polyacetal (POM); and a liquid crystal polymer (LCP). Examples of the nylon resin include polylactams such as nylon 6, nylon 11, and nylon 12; condensates of dicarboxylic acid and diamine such as nylon 6,6, nylon 6,10, and nylon 6,12; copolyamides such as nylon 6/6,6, nylon 6/6,10, nylon 6/12, nylon 6/6,12, nylon 6/6,10/6,10, nylon 6/6,6/6,12, and nylon 6/polyether; and nylon 6T, nylon 9T, nylon MXD6, aromatic nylon, and amorphous nylon. For example, nylon 12 can be used as the thermoplastic resin.

Examples of the magnetic powders include rare earth magnetic powders such as SmFeN, NdFeB, SmCo, etc. The magnetic powders may be SmFeN-based magnetic powders. In such a case, the magnetic material 30 includes a resin and SmFeN-based magnetic powders. Examples of the SmFeN-based magnetic powders include nitrides made of the rare-earth metal of Sm, iron (Fe), and nitrogen (N) of the general formula Sm*ₓ*Fe_{100-*x*-*y*}N*_{y}*. It is favorable for x to be not less than 8.1 atomic% and not more than 10 atomic%, y to be not less than 13.5 atomic% and not more than 13.9 atomic%, and the remainder being mainly Fe. The magnetic powders may be SmFeN-based magnetic powders having a Th₂Zn₁₇ crystal structure. The magnetic powder may be SmFeN-based anisotropic magnetic powders. For example, the SmFeN-based magnetic powders can be manufactured by a method discussed in JP-A H11-189811 (Kokai). The magnetic powder may include a SmFeN-based core portion, and a covering portion including phosphorus (P) and oxygen (O). Surface treatment of the magnetic powders may be performed using a silane coupling agent, etc.

It is favorable for the average particle size of the magnetic powders to be not more than 10 µm. As a result, the crystal particle size of the magnetic powders is sufficiently small, and the coercivity of the magnetic powders can be increased. The fluidity of the magnetic material 30 tends to decrease as the average particle size of the magnetic powders decreases. The effect of providing the gas venting groove 21 that connects two or more holes 13 is obtained even more easily when magnetic powders having an average particle size of not more than 10 µm is used because the filling pressure increases as the fluidity decreases. The reduced fluidity of the magnetic material 30 can reduce the likelihood of the magnetic material 30 overflowing into the gas venting groove 21. It is more favorable for the average particle size of the magnetic powders to be not more than 6 µm, and more favorably not more than 4 µm. The coercivity of the magnetic powders can be further increased thereby. It is favorable for the average particle size of the magnetic powders to be not less than 1 µm. The fill factor of the magnetic powders in the magnetic material 30 can be increased thereby. It is more favorable for the average particle size of the magnetic powders to be not less than 2 µm, and more favorably not less than 2.5 µm. It is favorable for the average particle size of the magnetic powders to be not less than 1 µm and not more than 10 µm, more favorably not less than 2 µm and not more than 10 µm, and more favorably not less than 2 µm and not more than 4 µm. The average particle size is measured as the particle size corresponding to 50% of the cumulative volume of the particle size distribution from the small particle size side, and can be measured by, for example, a laser diffraction particle size analyzer (HELOS & RODOS of Japan Laser Corp.).

The span of the magnetic powders, as defined by span = (D90 - D10)/D50, is favorably not more than 2, and more favorably not more than 1.5, wherein the particle sizes D90, D10, and D50 are the particle sizes corresponding to cumulative sums of the particle size distribution of 90%, 10%, and 50%. When greater than 2, the coercivity tends to decrease due to the increase of the ratio of micro magnetic powders with small coercivities.

It is favorable for the fill factor of the magnetic powders in the magnetic material 30 to be not less than 50 volume%, and more favorably not less than 60 volume%. As a result, the residual magnetic flux density of a magnet 40 obtained can be increased. Also, the effect of providing the gas venting groove 21 connecting two or more holes 13 is obtained even more easily due to the tendency of the fluidity of the magnetic material 30 to decrease as the fill factor of the magnetic powders in the magnetic material 30 increases. By reducing the fluidity of the magnetic material 30, the likelihood of the magnetic material 30 overflowing into the gas venting groove 21 can be reduced.

To obtain the magnet 40 with magnetically-oriented magnetic powders, a magnetic field for the orientation is applied to the magnetic material 30 in the process S102 of injection molding. The application of the magnetic field for the orientation is started at least before the resin completely hardens. The axis of easy magnetization of the magnetic powders included in the magnetic material 30 can be aligned by applying the magnetic field to the magnetic material 30. The mold 20 can include an orientation magnet to apply the magnetic field to the magnetic material 30. An electromagnet or a permanent magnet can be used as the orientation magnet. When a permanent magnet is used as the orientation magnet, the application of the magnetic field and the injection molding are simultaneously performed. The magnitude of the orientation field can be, for example, not less than 637 kA/m (8 kOe) and not more than 1511 kA/m (19 kOe).

### Process of removing holding member from mold

In the process S103 of removing the holding member 10 from the mold 20, the holding member 10 is removed from the mold 20. The magnet unit 100 is obtained thereby. The magnetic material 30 in the process S102 of injection molding becomes the magnet 40 in the magnet unit 100 shown in FIG. 5 (after being solidified). The magnet 40 is located in each of the holes 13 of the holding member 10 removed from the mold 20. The magnetic material 30 that remains in the gates 23 is cut away from the magnetic material 30 filled into the holes 13 in the process S103 of removing the holding member 10 from the mold 20 or after the process S103.

A process of magnetizing may be performed after the process S103 of removing the holding member 10 from the mold 20. When the process of magnetizing is performed, the magnet unit 100 including the magnet 40 is obtained as a result of being subjected to the process of magnetizing. In the process of magnetizing, a magnetic field for magnetization is applied to the holding member 10 in which the magnetic material 30 is provided. Examples of the magnetization method include pulsed magnetic field generation, static magnetic field generation, etc. The magnitude of the magnetic field for magnetization in the process of magnetizing can be, for example, not less than 1990 kA/m (25 kOe) and not more than 4777 kA/m (60 kOe). The magnetic field for magnetization in the process of magnetizing can be greater than the magnetic field for magnetic orientation in the process S102 of injection molding.

### Magnet unit

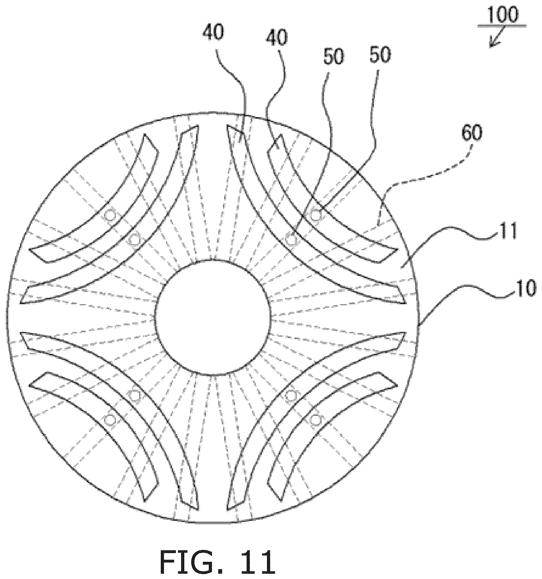

The magnet unit 100 according to the embodiment will now be described using FIGS. 5 and 11. FIG. 11 schematically illustrates a transparent plan view of the magnet unit 100 according to the embodiment. FIG. 11 illustrates a transparent plan view from the first end surface 11 side. In FIG. 11, a trace 60 provided at the second end surface 12 side is illustrated by broken lines.

The magnet unit 100 includes the holding member 10 and the multiple magnets 40. The multiple holes 13 that extend from the first end surface 11 to the second end surface 12 are provided in the holding member 10. The multiple magnets 40 are placed respectively in the multiple holes 13. The magnet unit 100 includes one or more gate marks 50 at the first end surface 11 side. The magnet unit 100 includes one or more traces 60 of a groove connecting two or more of the multiple magnets 40. The trace 60 is located at the second end surface 12 side. The magnet unit 100 includes the trace 60 of a groove connecting two or more of the multiple holes 13 at the second end surface 12 side.

The magnet unit 100 is, for example, a rotor. The holding member 10 is a member including the holes 13 in each of which the magnet 40 is located. In the magnet unit 100 according to the embodiment, the magnet 40 is filled into each of the holes 13. As described above, the holding member 10 is, for example, a rotor core.

The magnet 40 includes a resin and magnetic powders. The resin can include the materials described above as the resin included in the magnetic material 30. The magnetic powders can include the materials described above as the magnetic powders included in the magnetic material 30. The magnet 40 can include a resin and SmFeN-based magnetic powders. It is favorable for the fill factor of the magnetic powders in the magnet 40 to be not less than 50 volume%, and more favorably not less than 60 volume%. The residual magnetic flux density of the magnet 40 can be increased thereby. The volume percentage of the fill factor of the magnetic powders in the magnet 40 may be calculated from a cross section of a portion of the magnet 40. For example, a scanning electron microscope (SEM) image of the cross section of a portion of the magnet 40 is imaged, and the ratio of the area of the magnetic powders to the area of the magnet 40 in the SEM image can be considered to be the volume percentage of the fill factor of the magnetic powders in the magnet 40.

The gate mark 50 is formed in the magnet 40. For example, the gate mark 50 has a convex shape at the surface of the magnet 40 at the first end surface 11 side. The shape of the gate mark 50 when viewed in plan is, for example, circular or elliptical. One or more gate marks 50 is provided for one magnet 40.

The trace 60 is formed in at least one of the holding member 10 or the magnet 40. The trace 60 is observed as having a continuous linear shape or a fragmented linear shape. For example, the trace 60 may be observed by irradiating the second end surface 12 from an oblique direction with light from a light source. The trace 60 that is provided in the holding member 10 is formed by the mold 20, in which the gas venting groove 21 is provided, pressing the holding member 10. The trace 60 that is provided in the magnet 40 is formed by the mold 20, in which the gas venting groove 21 is provided, pressing the magnetic material 30. The trace 60 is formed at the location where the edge of the gas venting groove 21 was. A step or an unevenness formed in the second end surface 12 of the holding member 10 may be observed as the trace 60. When the magnetic material 30 is extruded into the gas venting groove 21 and remains as the magnet 40 adhered to the trace 60, the magnet 40 that remains on the trace 60 is discontinuous from one hole 13 to another hole 13 connected to the one hole 13 by the trace 60. In other words, the magnet 40 that is located at one hole 13 is not connected to the magnet 40 located at another hole 13 connected to the one hole 13 by the trace 60. At least a portion of the trace 60 is exposed without being covered with the magnet 40. The magnet 40 may not remain in the trace 60. The entire trace 60 may be exposed without being covered with the magnet 40. The position and shape of the trace 60 can be the same as the position and shape of the gas venting groove 21 described above. In addition to the trace 60, a trace having the same position and shape as the gas venting groove 22 may be located at the second end surface 12 side of the magnet unit 100.

In FIG. 11, the trace 60 is formed at the same position and has a same shape as the corresponding gas venting groove 21. The trace 60 may be a trace of only a portion of the gas venting groove 21. The trace 60 tends to form more easily in the magnet 40 than in the holding member 10. The trace 60 may be formed in only the magnet 40. When an extension line of one trace 60 and an extension line of another trace 60 match, it may be determined that the trace is formed by one continuous groove. When one estimated shape formed of two or more traces 60 and their extension lines have a position and shape that connect two or more of the multiple holes 13, it may be determined to be a trace 60 that connects the two or more of the multiple holes 13. When one estimated shape formed of two or more traces 60 and their extension lines have a position and shape that connect two or more of the multiple magnets 40, it may be determined to be a trace 60 that connects the two or more of the multiple magnets 40. For example, when an extension line of the trace 60 formed in one magnet 40 and an extension line of the groove trace 60 formed in another magnet 40 match, it can be determined to be a trace 60 that connects the two or more of the multiple magnets 40. The example shown in FIG. 11 corresponds to the example shown in FIG. 6. When the edge of the gas venting groove 21 does not overlap the hole 13 as in the example shown in FIG. 7, the trace 60 is formed only in the holding member 10.

The present disclosure includes the following embodiments.

Clause 1. A method for manufacturing a magnet unit, the method including:
placing a holding member in a mold, the holding member including a first surface, a second surface opposite to the first surface, and a plurality of holes extending from the first surface to the second surface, the mold including one or more gas venting grooves, said placing the holding member in the mold causing the second surface to face the one or more gas venting groove, and causing two or more of the plurality of holes to be connected to each other via the one or more gas venting grooves;
injection-molding a magnetic material into the plurality of holes of the holding member that is placed in the mold, from a side of the first surface; and
after said injection-molding, removing the holding member from the mold.

Clause 2. The method according to clause 1, wherein said placing the holding member in the mold causes an edge of the one or more gas venting grooves to align with an edge of the plurality of holes.

Clause 3. The method according to clause 2, wherein said placing the holding member in the mold causes a footprint of the one or more gas venting grooves to enclose a footprint of the plurality of holes.

Clause 4. The method according to clause 1, wherein each of the one or more gas venting grooves extends along a surface of the mold that faces the second surface of the holding member from an outer edge of the holding member.

Clause 5. The method according to clause 1, wherein the one or more gas venting grooves include a plurality of gas venting grooves radially spreading.

Clause 6. The method according to clause 5, wherein
the plurality of holes includes a first hole that crosses a first number of the plurality of gas venting grooves, and a second hole that crosses a second number of the plurality of gas venting grooves,
the second number being less than the first number,
an area of an opening of the first hole being greater than an area of an opening of the second hole.

Clause 7. The method according to any one of clauses 1-6, wherein
the plurality of holes includes a plurality of first holes and a plurality of second holes, and
an area of an opening of each of the plurality of second holes is less than an area of an opening of each of the plurality of first holes in a plan view from a side of the second surface.

Clause 8. The method according to clause 7, wherein
the one or more gas venting grooves includes a first groove, and
said placing the holding member in the mold causes one of the plurality of first holes and one of the plurality of second holes to be connected to each other via the first groove.

Clause 9. The method according to clause 7, wherein
the one or more gas venting grooves comprise a plurality of gas venting grooves, and
said placing the holding member in the mold causes one of the plurality of first holes and one of the plurality of second holes to be connected to each other via each of the plurality of gas venting grooves.

Clause 10. The method according to clause 7, wherein
the one or more gas venting grooves comprise a plurality of gas venting grooves, and
said placing the holding member in the mold causes one of the plurality of first holes and one of the plurality of second holes to be connected to each other via one, but not two or more, of the plurality of gas venting grooves.

Clause 11. The method according to clause 7, wherein
the one or more gas venting grooves comprise a first gas venting groove and a second gas venting groove, and
said placing the holding member in the mold causes one of the plurality of first holes and one of the plurality of second holes to be connected to each other via the first gas venting groove, and causes the first gas venting groove and the second gas venting groove to be connected to each other via the one of the plurality of first holes, and not via the one of the plurality of second holes.

Clause 12. The method according to clause 7, wherein
the one or more gas venting grooves includes a first gas venting groove, and
said placing the holding member in the mold causes two or more of the plurality of first holes and two or more of the plurality of second holes to be connected to each other via the first gas venting groove.

Clause 13. The method according to any one of clauses 1-12, wherein the magnetic material includes a resin and SmFeN-based magnetic powders.

Clause 14. The method according to any one of clauses 1-13 wherein the holding member is a rotor core.

Clause 15. The method according to any one of clauses 1-14, wherein the holding member is cylindrical.

Clause 16. A magnet unit, including:
a holding member including a first surface, a second surface opposite to the first surface, and a plurality of holes extending from the first surface to the second surface; and
a plurality of magnets in the plurality of holes, respectively,
a gate mark being formed on the first surface,
a trace of a groove connecting two or more of the plurality of holes being formed on the second surface.

Clause 17. The magnet unit according to clause 16, wherein
the plurality of holes includes a plurality of first holes and a plurality of second holes, and
an area of an opening of each of the plurality of second holes is less than an area of an opening of each of the plurality of first holes in a plan view from a side of the second surface.

Clause 18. The magnet unit according to clause 16 or 17, wherein each of the magnets is formed with a resin and SmFeN-based magnetic powders.

Clause 19. The magnet unit according to any one of clauses 16-18, wherein the holding member is a rotor core.

Clause 20. The magnet unit according to any one of clauses 16-19, wherein the holding member is cylindrical.

## Claims

1. A method for manufacturing a magnet unit (100), the method comprising:
placing a holding member (10) in a mold (20), the holding member (10) including a first surface, a second surface opposite to the first surface, and a plurality of holes (13) extending from the first surface to the second surface, the mold (20) including one or more gas venting grooves (21), said placing the holding member (10) in the mold (20) causing the second surface to face the one or more gas venting grooves (21), and causing two or more of the plurality of holes (13) to be connected to each other via the one or more gas venting grooves (21);
injection-molding a magnetic material (30) into the plurality of holes (13) of the holding member (10) that is placed in the mold (20), from a side of the first surface; and
after said injection-molding, removing the holding member (10) from the mold (20).

2. The method according to claim 1, wherein said placing the holding member (10) in the mold (20) causes an edge of the one or more gas venting grooves (21) to align with an edge of the plurality of holes (13).

3. The method according to claim 2, wherein said placing the holding member (10) in the mold (20) causes a footprint of the one or more gas venting grooves to enclose a footprint of the plurality of holes (13).

4. The method according to claim 1, wherein each of the one or more gas venting grooves (21) extends along a surface of the mold (20) that faces the second surface of the holding member (10) from an outer edge of the holding member (10).

5. The method according to claim 1, wherein the one or more gas venting grooves (21) include a plurality of gas venting grooves (21) radially spreading.

6. The method according to claim 5, wherein
the plurality of holes (13) includes a first hole (13A) that crosses a first number of the plurality of gas venting grooves (21), and a second hole (13B) that crosses a second number of the plurality of gas venting grooves (21),
the second number being less than the first number,
an area of an opening of the first hole (13A) being greater than an area of an opening of the second hole (13B).

7. The method according to any one of claims 1-6, wherein
the plurality of holes (13) includes a plurality of first holes (13A) and a plurality of second holes (13B), and
an area of an opening of each of the plurality of second holes (13B) is less than an area of an opening of each of the plurality of first holes (13A) in a plan view from a side of the second surface.

8. The method according to claim 7, wherein
the one or more gas venting grooves (21) includes a first groove (21A), and
said placing the holding member (10) in the mold (20) causes one of the plurality of first holes (13A) and one of the plurality of second holes (13B) to be connected to each other via the first groove (21A).

9. The method according to any one of claims 1-8, wherein the magnetic material (30) includes a resin and SmFeN-based magnetic powders.

10. The method according to any one of claims 1-9 wherein the holding member (10) is a rotor core.

11. The method according to any one of claims 1-10, wherein the holding member (10) is cylindrical.

12. A magnet unit (100), comprising:
a holding member (10) including a first surface, a second surface opposite to the first surface, and a plurality of holes (13) extending from the first surface to the second surface; and
a plurality of magnets in the plurality of holes (13), respectively,
a gate mark (50) being formed on the first surface,
a trace (60) of a groove connecting two or more of the plurality of holes (13) being formed on the second surface.

13. The magnet unit (100) according to claim 12, wherein
the plurality of holes (13) includes a plurality of first holes (13A) and a plurality of second holes (13B), and
an area of an opening of each of the plurality of second holes (13B) is less than an area of an opening of each of the plurality of first holes (13A) in a plan view from a side of the second surface.

14. The magnet unit (100) according to claim 12 or 13, wherein each of the magnets is formed with a resin and SmFeN-based magnetic powders.
